# EUROPÄISCHE PATENTSCHRIFT

(11) **EP 2 601 827 B1**
(45) Veröffentlichungstag und Bekanntmachung des Hinweises auf die Patenterteilung: **18.11.2015**
(21) Anmeldenummer: 12184630.7
(22) Anmeldetag: 17.09.2012
(51) Int. Cl.: A01D 41/12, B60S 1/34, B60S 1/04

(54) **Landwirtschaftliche Maschine**
Agricultural machine
Machine agricole

(30) Priorität: 08.12.2011 DE 102011120749
(43) Veröffentlichungstag der Anmeldung: 12.06.2013
(73) Patentinhaber: CLAAS Selbstfahrende Erntemaschinen GmbH, 33428 Harsewinkel (DE)
(72) Erfinder: Jeppe, Eckehard, 34289 Zierenberg (DE); Hohm, Robert, 59227 Ahlen (DE)

(56) Entgegenhaltungen:
- EP-A1- 1 674 324
- DE-A1- 4 203 694
- DE-U1- 20 013 646
- US-A- 5 072 577
- US-A- 5 621 942

## Beschreibung

Die vorliegende Erfindung betrifft eine selbstfahrende landwirtschaftliche Maschine, insbesondere eine Erntemaschine wie etwa einen Mähdrescher, einen Feldhäcksler oder dergleichen. Eine solche Maschine trägt im Allgemeinen im Arbeitseinsatz ein Erntevorsatz, der erheblich breiter ist als das Fahrgestell der Maschine, und der, um einen störungsfreien Betrieb zu gewährleisten, für einen Fahrer der Maschine bequem zu überblicken sein sollte. Ein Fahrerarbeitsplatz ist daher an einer solchen Maschine knapp hinter dem Erntevorsatz und oberhalb von diesem angeordnet, und Fensterscheiben, die den Fahrersitz umgeben, sind so groß, dass der Fahrer von seinem Sitz aus den Erntevorsatz im Wesentlichen vollständig überblicken kann.

Einschränkungen des Sichtfeldes ergeben sich im Wesentlichen aus der Notwendigkeit, ein Kabinendach tragende A-Säulen, ein Lenkrad, diverse Anzeigeinstrumente sowie deren Halterung im Blickfeld des Fahrers unterzubringen.

Die US 5,072,577 beschreibt einen Mähdrescher mit einem Rahmen, einem am Rahmen schwenkbar angeordneten Einzugskanal sowie einer auf dem Rahmen angeordneten Kabine. Die Kabine weist eine Frontscheibe auf, an der eine Anzeigescala zur Anzeige der Höhenposition des Einzugskanales angeordnet ist.

Die DE 200 13 646 U1 beschreibt eine Steuerung für eine Landmaschine mit einer Kabine, wobei auf der Frontscheibe eine als Anzeige der Steuerung dienende Folie angeordnet ist.

Aus der einzigen Figur des Dokuments DE 87 010 76 U1 wird die oben angesprochene Problematik gut deutlich. Die Figur zeigt das Blickfeld eines Fahrers dieser herkömmlichen Maschine. Dieses Blickfeld ist eingeschränkt durch ein Lenkrad, ein Armaturenbrett, das diverse Anzeigeinstrumenten und Bedienelemente trägt, und eine die Frontscheibe seitlich begrenzende A-Säule. Ein zentraler Bereich des Blickfelds oberhalb des Lenkrads ist blockiert durch einen Bildschirm sowie durch eine Konsole, die den Bildschirm an der A-Säule verankert.

Eine Möglichkeit, das Blickfeld des Fahrers von Einschränkungen zu befreien, ist, Anzeigeinstrumente und/oder Bedienelemente, die nicht ständig dem Fahrer vor Augen liegen müssen, in einer seitwärts vom Fahrersitz angeordneten Konsole unterzubringen. Insbesondere Bedienelemente können in einem vorderen Bereich einer solchen Konsole in für den Fahrer ideal bequem erreichbarer Weise angeordnet sein, während ein hinterer Bereich der Konsole gleichzeitig dem Fahrer als Armlehne dienen kann.

Im Rahmen neuer Abgasvorschriften für landwirtschaftliche Maschinen besteht die gesetzliche Anforderung, den Fahrer der Maschine über den Status eines die Maschine antreibenden Verbrennungsmotors zu informieren, insbesondere dann, wenn die Gefahr besteht, dass Abgasgrenzwerte nicht eingehalten werden können. Ein hierfür vorgesehenes Anzeigenstrument soll sich im Blickfeld des Fahrers befinden. Diese Anforderung hat herkömmlicherweise zur Folge, dass sowohl das Anzeigeinstrument als auch seine Halterung den Blick des Fahrers ins Freie einschränken.

Aufgabe der vorliegenden Erfindung ist, eine selbstfahrende landwirtschaftliche Maschine anzugeben, bei der die Sicht des Fahrers durch ein in seinem Blickfeld platziertes Anzeigeinstrument nur minimal eingeschränkt ist.

Die Aufgabe wird gelöst durch eine selbstfahrenden landwirtschaftlichen Maschine gemäß dem Anspruch 1.

Ein Gehäuse des Anzeigeinstruments nimmt zweckmäßigerweise einen Motor zum Antreiben des Scheibenwischers der Frontscheibe aufnehmen. So beeinträchtigt der Scheibenwischermotor die Sicht des Fahrers nicht zusätzlich.

Wenn der Scheibenwischermotor geschützt an einer Innenseite der Frontscheibe angeordnet ist, ist eine Öffnung der Frontscheibe erforderlich, um die Scheibenwischerwelle hindurchzuführen. Eine solche Öffnung kann zweckmäßigerweise auch zur Verankerung des Anzeigeinstrumentes dienen.

Eine zentrale, von den Rändern der Frontscheibe weit beabstandete Platzierung des Gehäuses ermöglicht eine große Drehbewegungsfreiheit des Scheibenwischers von über 180°, vorzugsweise über 270°.

Um die Einschränkung des Blickfeldes durch das Anzeigeinstrument und ein Lenkrad zu minimieren, sollte das Anzeigeinstrument im Blickfeld des Fahrers an das Lenkrad angrenzen oder, besser noch, in einer Öffnung des Lenkrads sichtbar sein.

Eine zur Stützung des Lenkrades erforderliche Säule kann genutzt werden, um daran eine Signalleitung des Anzeigeinstruments zu führen. So behindert auch die Signalleitung nicht unnötig den Blick des Fahrers ins Freie.

Um einen freien Blick auf den Boden auch in unmittelbarer Nähe des Fahrzeugs zu ermöglichen, sollte eine Unterkante der Frontscheibe möglichst tief liegen, wenigstens tiefer als eine Sitzfläche eines Fahrersitzes. Die Frontscheibe kann bis zu einer Bodenplatte des Fahrerarbeitsplatzes hinabreichen.

Das Anzeigeinstrument ist vorzugsweise eingerichtet, wenigstens auf die Abgasqualität eines Verbrennungsmotors der Maschine bezogene Informationen anzuzeigen.

Zu diesem Zweck kann im einfachsten Fall ein binäres Anzeigeelement vorgesehen sein, dessen Zustand erkennen lässt, ob Abgas des Verbrennungsmotors einen Schadstoffgrenzwert einhält oder nicht.

Weiterhin kann, wenn die Maschine einen Tank für ein die Abgasqualität beeinflussendes Hilfsverbrauchsmittel wie etwa zusammen mit dem Kraftstoff in den Verbrennungsmotor einzuspritzende Harnstofflösung aufweist, das Anzeigeinstrument mit einem Anzeigeelement zum Anzeigen des Füllstands des Tanks ausgestattet sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines erfindungsgemäßen Mähdreschers;
- Fig. 2: eine innere Ansicht der Fahrerkabine des Mähdreschers aus Fig. 1;
- Fig. 3: einen schematischen Schnitt durch das an der Frontscheibe der Fahrerkabine montierte Anzeigeinstrument; und
- Fig. 4: eine Draufsicht auf das Anzeigeinstrument.

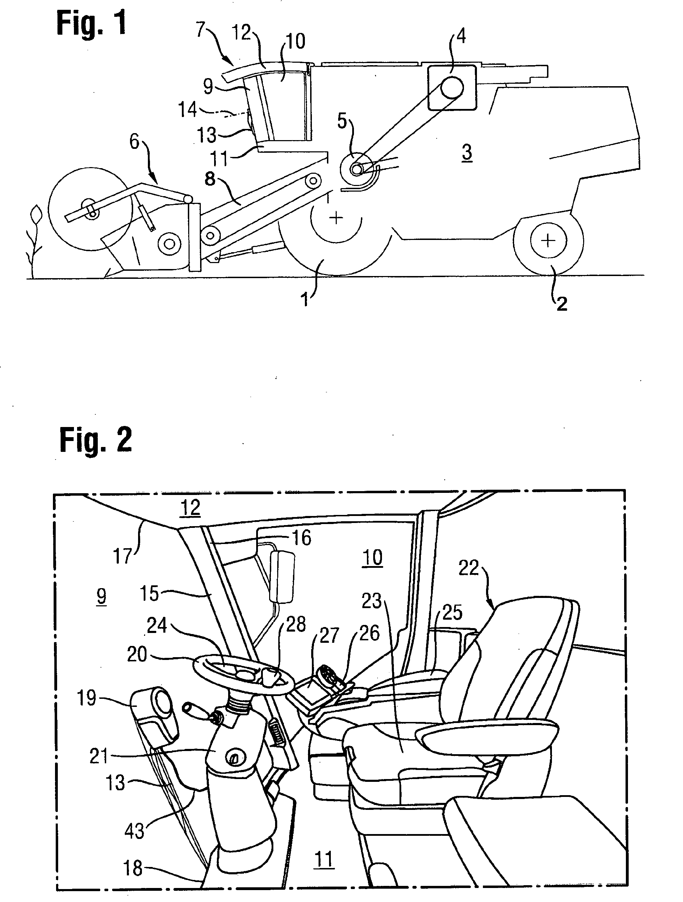

Der in Fig. 1 gezeigter Mähdrescher hat in an sich bekannter Weise ein Fahrgestell mit vorderen Rädern 1 und lenkbaren hinteren Rädern 2 sowie eine auf dem Fahrgestell montierte Karosserie 3, in der ein Verbrennungsmotor 4, üblicherweise ein Dieselmotor, eine Dreschtrommel 5, und diverse Aggregate zur Weiterverarbeitung von aus der Dreschtrommel ausgeschiedenen Erntegut untergebracht sind. Der Verbrennungsmotor 4 treibt über nicht dargestellte Kupplungen und Getriebe die Räder 1 und 2, die Dreschtrommel 5 und die Weiterverarbeitungsaggregate an. Ein Kraftstofftank sowie ein Tank für eine Harnstofflösung, die vorgesehen ist, um zur Reduzierung der Stickoxidemission in einen sich zwischen dem Motor 4 und einem Abgaskatalysator erstreckenden Abgasstrang eingespritzt zu werden, sind ebenfalls in der Karosserie 3 untergebracht.

Das Erntegut ist der Dreschtrommel 5 von einem austauschbar vorne an der Karosserie montierten Erntevorsatz 6 zugeführt. Die Figur zeigt als Erntevorsatz 6 ein Getreideschneidwerk; dieses kann nach Bedarf gegen einen an eine andere Art Erntegut angepassten Erntevorsatz ausgetauscht werden.

Eine Fahrerkabine 7 ist an einem vorderen Ende der Karosserie 3 über einen vom Erntevorsatz 6 zur Dreschtrommel 5 führenden Schrägförderer 8 angeordnet. Eine Frontscheibe 9 erstreckt sich über praktisch die gesamte Höhe der Fahrerkabine 7 hinweg, von einer Bodenplatte 11 bis zu einem Dach 12. Auch Türen 10 der Fahrerkabine 7 sind auf ihrer gesamten Höhe, von der Bodenplatte 11 bis zum Dach 12, verglast, um dem Fahrer einen möglichst uneingeschränkten Blick ins Freie, über den gesamten Erntevorsatz 6 und die vor dem Mähdrescher liegende Bodenfläche zu bieten.

Ein Scheibenwischer 13 ist an der Frontscheibe 9 um eine Achse 14 drehbar montiert, die auf der Frontscheibe 9 an zentraler Stelle senkrecht steht. In der Darstellung der Fig. 1 befindet sich der Scheibenwischer 13 in einer Ruhestellung, in der sich sein Blatt von der Achse 14 aus radial nach unten erstreckt. Zum Wischen der Frontscheibe 9 ist der Scheibenwischer 13 abwechselnd im Uhrzeiger- und Gegenuhrzeigersinn um je 360° drehbar.

Fig. 2 zeigt eine Innenansicht der Fahrerkabine 7. Die Frontscheibe 9 ist nicht vollständig dargestellt, zu sehen ist ein seitlicher Rand 15, an dem die Frontscheibe 9 an eine A-Säule 16 anschließt, sowie jeweils ein Stück des an das Dach 12 anschließenden oberen Randes 17 und des an die Bodenplatte 11 anschließenden unteren Randes 18. An zentraler Stelle der Frontscheibe 9 ist ein Anzeigeinstrument 19 montiert, dessen Gehäuse auch einen den Scheibenwischer 13 antreibenden Motor beherbergt.

Genauso wie das Anzeigeinstrument 19 sind ein Lenkrad 20 und eine von der Bodenplatte 11 in geringem Abstand von dem Rand 18 aufragende, das Lenkrad 20 tragende Lenkradsäule 21 und ein Fahrersitz 22 auf einer gedachten - in der Fig. nicht dargestellten - Längsmittelebene oder Symmetrieebene der Fahrerkabine 7 angeordnet, so dass ein auf den Fahrersitz 22 sitzender Fahrer, ggf. nach Höhenjustage einer Sitzfläche 23 des Fahrersitzes 22, das Anzeigeinstrument 19 durch eine zentrale Öffnung 24 des Lenkrads 20 hindurch beobachten kann.

In Verlängerung einer rechten Armlehne 25 des Fahrersitzes 22 sind ein Multifunktionsgriff 26 und ein Bildschirm 27 angeordnet. Der Multifunktionsgriff 26 ist so platziert, dass er durch die rechte Hand des Fahrers bequem bedienbar ist, während dessen rechter Unterarm auf der Armlehne 25 ruht. Der Multifunktionsgriff 26 ist in einem oder zwei Freiheitsgraden bewegbar, insbesondere schwenkbar, wobei seine Position in jedem dieser Freiheitsgrade den Sollwert einer Betriebsgröße des Mähdreschers festlegt. Weitere Betriebsgrößen sind mit Hilfe von an der Oberfläche des Multifunktionsgriffs 26 angeordneten Schaltern und/oder Reglern einstellbar.

Ein Knauf 28 am Lenkrad 20 erleichtert dessen einhändige Betätigung mit der linken Hand, während die rechte den Multifunktionsgriff 26 hält.

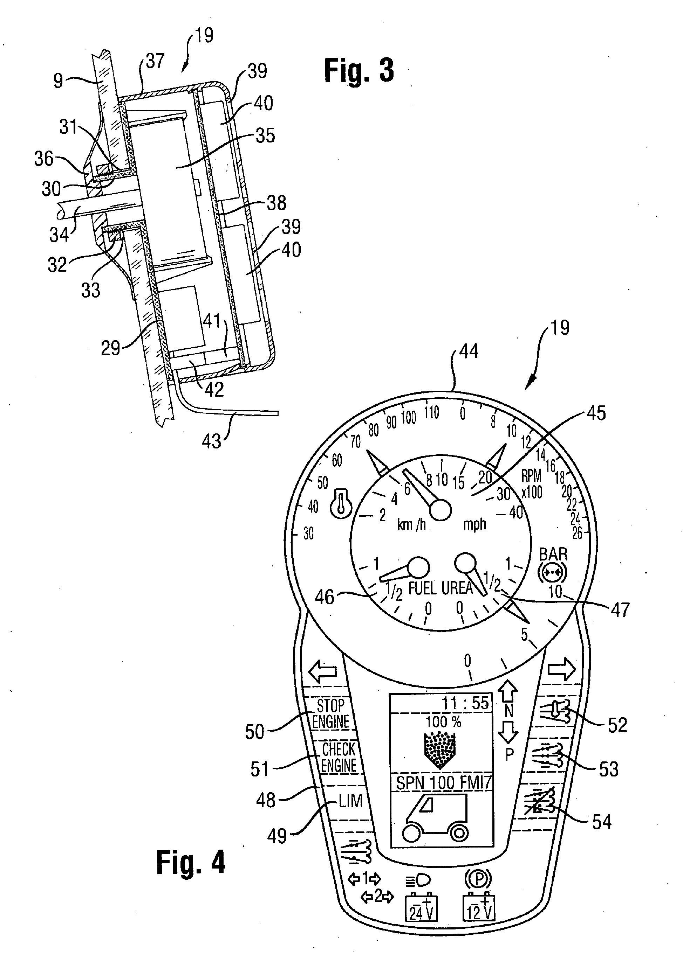

Fig. 3 zeigt anhand eines schematischen Querschnitts ein Beispiel für die Anbringung des Anzeigeinstruments 19 an der Frontscheibe 9. Eine Grundplatte 29 des Anzeigeinstruments 19 liegt an der Innenseite der Frontscheibe 9 an und trägt einen zylindrischen Schaft 30, der eine Bohrung 31 der Frontscheibe 9 durchsetzt. Die Grundplatte 29 ist an der Frontscheibe 9 durch eine auf einem Gewinde des Schafts 30 aufgeschraubte Mutter 32 und eine elastische, die Bohrung 31 abdichtende Unterlegscheibe 33 fixiert.

Durch den Schaft 30 erstreckt sich eine Welle 34 zwischen einem an der Grundplatte 29 verrasteten Scheibenwischermotor 35 und dem in der Figur nicht dargestellten Scheibenwischer 13. Ein am Schaft 30 verrasteter, rings um die Welle 34 dicht anliegender elastischer Überwurf 36 verdeckt Schaft 30 und Mutter 32.

Auf der Grundplatte 29 ist ein Gehäuse 37 befestigt, hier z.B. durch Verrastung an den Rändern der Grundplatte 29. In dem aus Kunststoff spritzgeformten Gehäuse 37 ist ihrerseits eine Leiterplatte 38 verrastet, die auf einer Seite durch Fenster 39 des Gehäuses 37 hindurch sichtbare Anzeigeelemente 40 trägt. Auf der anderen Seite der Leiterplatte 38 ist ein Steckverbinder 41 angebracht, der beim Aufrasten des Gehäuses 37 auf die Grundplatte 29 eine Verbindung zu einem komplementären Steckverbinder 42 der Grundplatte und über diesen zu einem Signalkabel 43 herstellt. Das durch eine Kerbe des Gehäuses 37 herausgeführte Signalkabel 43 überbrückt, wie in Fig. 2 gezeigt, freihängend den Zwischenraum zwischen der Frontscheibe 9 und der Lenkradsäule 21 und erstreckt sich dort weiter zu Sensoren an diversen Stellen der Karosserie 3, deren Messergebnisse von den Anzeigeelementen 40 angezeigt werden.

Gleichzeitig kann das Signalkabel 43 zur Steuerung und Stromversorgung des Scheibenwischermotors 35 dienen.

Fig. 4 zeigt eine Draufsicht auf eine exemplarische Ausgestaltung des Anzeigeinstruments 19 aus der Perspektive des Fahrers. Ein auf die Achse 14 zentrierter kreisrunder oberer Bereich 44 des Anzeigeinstruments 19 umfasst diverse Skalen-Anzeigeelemente, wie etwa einen Tachometer 45, Füllstandsanzeigen 46, 47 für den Kraftstofftank und den Harnstofftank, etc. Ein angrenzender unterer Bereich 48 enthält eine Mehrzahl von Kontrollleuchten, die den Fahrer auf mögliche Betriebsstörungen aufmerksam machen sollen. Neben einer an einem Abgassensor gekoppelten Kontrollleuchte 49, deren Aufleuchten auf einen kritisch hohen Schadstoffgehalt des Abgases hinweist, können Kontrollleuchten 50, 51 vorgesehen sein, die auf unterschiedlich schwerwiegende Störungen des Verbrennungsmotors 4 hinweisen, wie etwa eine ein kurzfristiges Anhalten des Motors 4 erfordernde oder eine lediglich eine Wartung erfordernde Störung. Andere Kontrollleuchten 52 bis 54 können den Betrieb der Dreschtrommel oder nachgeschalteter Reinigungseinheiten betreffen. So können für den Betrieb der Maschine relevante Informationen dem Fahrer in hoher Dichte bei minimaler Einschränkung seiner Sicht ins Freie dargeboten werden.

Das Anzeigeinstrument 19 kann aus einer Vielzahl von diskreten Skalen-Anzeigeelementen mit jeweils körperlich beweglichen Zeigern und Kontrollleuchten zusammengesetzt sein; vorzugsweise umfasst es einen Bildschirm, der mit einem Bilder der Anzeigeelemente und Kontrollleuchten repräsentierenden Bildsignal beschaltet ist.

### Bezugszeichen

- 1: vorderes Rad
- 2: hinteres Rad
- 3: Karosserie
- 4: Verbrennungsmotor
- 5: Dreschtrommel
- 6: Erntevorsatz
- 7: Fahrerkabine
- 8: Schrägförderer
- 9: Frontscheibe
- 10: Tür
- 11: Bodenplatte
- 12: Dach
- 13: Scheibenwischer
- 14: Achse
- 15: seitlicher Rand
- 16: A-Säule
- 17: oberer Rand
- 18: unterer Rand
- 19: Anzeigeinstrument
- 20: Lenkrad
- 21: Lenkradsäule
- 22: Fahrersitz
- 23: Sitzfläche
- 24: Öffnung
- 25: Armlehne
- 26: Multifunktionsgriff
- 27: Bildschirm
- 28: Knauf
- 29: Grundplatte
- 30: Schaft
- 31: Bohrung
- 32: Mutter
- 33: Unterlegscheibe
- 34: Welle
- 35: Scheibenwischermotor
- 36: Überwurf
- 37: Gehäuse
- 38: Leiterplatte
- 39: Fenster
- 40: Anzeigeelement
- 41: Steckverbinder
- 42: Steckverbinder
- 43: Signalkabel
- 44: oberer Bereich
- 45: Tachometer
- 46: Füllstandsanzeige
- 47: Füllstandsanzeige
- 48: unterer Bereich
- 49: Kontrollleuchte
- 50: Kontrollleuchte
- 51: Kontrollleuchte
- 52: Kontrollleuchte
- 53: Kontrollleuchte
- 54: Kontrollleuchte

## Patentansprüche

1. Selbstfahrende landwirtschaftliche Maschine, insbesondere Erntemaschine, mit einem hinter einer Frontscheibe (9) angeordneten Fahrerarbeitsplatz und einem vor dem Fahrerarbeitsplatz angeordneten Anzeigeinstrument (19), wobei das Anzeigeinstrument (19) an der Frontscheibe (9) befestigt ist, **dadurch gekennzeichnet, dass** ein Motor (35) zum Antreiben eines Scheibenwischers (13) der Frontscheibe (9) in einem Gehäuse (37) des Anzeigenstruments (19) angeordnet ist.

2. Maschine nach Anspruch 1, **dadurch gekennzeichnet, dass** das Anzeigeinstrument (19) beabstandet von den Rändern (15, 17, 18) der Frontscheibe (9) angeordnet ist.

3. Maschine nach Anspruch 2, **dadurch gekennzeichnet**, das.s das Anzeigeinstrument (19) an einer Öffnung (31) der Frontscheibe (19) verankert ist.

4. Maschine nach Anspruch 1 bis 3, **dadurch gekennzeichnet, dass** ein von dem Scheibenwischermotor (35) angetriebener Scheibenwischer (13) auf der Frontscheibe (9) mit einer Drehbewegungsfreiheit von über 180°, vorzugsweise über 270°, drehbar ist.

5. Maschine nach einem der vorhergehenden Ansprüche, **dadurch gekennzeichnet, dass** das Anzeigeinstrument (19) im Blickfeld des Fahrers an ein Lenkrad (20) angrenzt oder in einer Öffnung (24) des Lenkrads (20) sichtbar ist.

6. Maschine nach Anspruch 5, **dadurch gekennzeichnet, dass** eine Signalleitung (43) des Anzeigeinstruments (19) über eine das Lenkrad (20) tragende Säule (21) geführt ist.

7. Maschine nach einem der vorhergehenden Ansprüche, **dadurch, gekennzeichnet, dass** eine Unterkante (18) der Frontscheibe (9) tiefer liegt als eine Sitzfläche (23) eines Fahrersitzes (22).

8. Maschine nach einem der vorhergehenden Ansprüche, **dadurch gekennzeichnet, dass** das Anzeigeinstrument (19) eingerichtet ist, auf die Abgasqualität eines Verbrennungsmotors (4) der Maschine bezogene Informationen anzuzeigen.

9. Maschine nach Anspruch 8, **dadurch gekennzeichnet, dass** das Anzeigeinstrument (19) ein binäres Anzeigeelement (48) umfasst, dessen Zustand anzeigt, ob Abgas des Verbrennungsmotors (4) einen Schadstoffgrenzwert einhält oder nicht.

10. Maschine nach einem der vorhergehenden Ansprüche, **dadurch** gekenntzeichnet, **dass** sie einen Tank für ein die Abgasqualität beeinflussendes Hilfsverbrauchsmittel aufweist und das Anzeigeinstrument (19) ein Anzeigeelement (47) zum Anzeigen des Füllstands des Tanks aufweist.

## Claims

1. A self-propelled agricultural machine, in particular a harvester, comprising a driver operating position arranged behind a windscreen (9) and a display instrument (19) arranged in front of the driver operating position, wherein the display instrument (19) is fixed to the windscreen (9), **characterised in that** a motor (35) for driving a windscreen wiper (13) of the windscreen (9) is arranged in a housing (37) of the display instrument (19).

2. A machine according to claim 1 **characterised in that** the display instrument (19) is arranged spaced from the edges (15, 17, 18) of the windscreen (9).

3. A machine according to claim 2 **characterised in that** the display instrument (19) is anchored at an opening (31) of the windscreen (19).

4. A machine according to claims 1 to 3 **characterised in that** a windscreen wiper (13) driven by the windscreen wiper motor (35) is rotatable on the windscreen (9) with a freedom of rotary movement of over 180°, preferably over 270°.

5. A machine according to one of the preceding claims **characterised in that** the display instrument (19) adjoins a steering wheel (20) in the field of view of the driver or is visible in an opening (24) in the steering wheel (20).

6. A machine according to claim 5 **characterised in that** a signal line (43) of the display instrument (19) is passed by way of a column (21) carrying the steering wheel (20).

7. A machine according to one of the preceding claims **characterised in that** a lower edge (18) of the windscreen (9) is lower than a seat surface (23) of a driver seat (22).

8. A machine according to one of the preceding claims **characterised in that** the display instrument (19) is adapted to display information relating to the exhaust gas quality of an internal combustion engine (4) of the machine.

9. A machine according to claim 8 **characterised in that** the display instrument (19) includes a binary display element (48) whose state indicates whether exhaust gas from the internal combustion engine (4) does or does not comply with a pollution limit value.

10. A machine according to one of the preceding claims **characterised in that** it has a tank for an auxiliary combustion means for influencing the exhaust gas quality and the display instrument (19) has a display element (47) for displaying the filling level of the tank.

## Revendications

1. Machine agricole automotrice, en particulier machine de récolte, avec un poste de travail de conducteur disposé derrière un pare-brise (9) et un instrument d'affichage (19) disposé devant le poste de travail de conducteur, l'instrument d'affichage (19) étant fixé au pare-brise (9), **caractérisée en ce qu'**un moteur (35) servant à entraîner un essuie-glace (13) du pare-brise (9) est disposé dans un boîtier (37) de l'instrument d'affichage (19).

2. Machine selon la revendication 1, **caractérisée en ce que** l'instrument d'affichage (19) est disposé à distance des bords (15, 17, 18) du pare-brise (9).

3. Machine selon la revendication 2, **caractérisée en ce que** l'instrument d'affichage (19) est ancré à une ouverture (31) du pare-brise (19).

4. Machine selon l'une des revendications 1 à 3, **caractérisée en ce qu'**un essuie-glace (13) entraîné par le moteur d'essuie-glace (35) peut tourner sur le pare-brise (9) avec une liberté de mouvement de rotation supérieure à 180°, de préférence supérieure à 270°.

5. Machine selon l'une des revendications précédentes, **caractérisée en ce que** l'instrument d'affichage (19) est adjacent à un volant de direction (20) dans le champ de vision du conducteur ou est visible dans une ouverture (24) du volant de direction (20).

6. Machine selon la revendication 5, **caractérisée en ce qu'**une ligne de signaux (43) de l'instrument d'affichage (19) est guidée par l'intermédiaire d'une colonne (21) portant le volant de direction (20).

7. Machine selon l'une des revendications précédentes, **caractérisée en ce qu'**un bord inférieur (18) du pare-brise (9) est situé plus bas qu'une surface d'assise (23) d'un siège de conducteur (22).

8. Machine selon l'une des revendications précédentes, **caractérisée en ce que** l'instrument d'affichage (19) est conçu pour afficher des informations liées à la qualité des gaz d'échappement d'un moteur à combustion (4) de la machine.

9. Machine selon la revendication 8, **caractérisée en ce que** l'instrument d'affichage (19) comprend un élément d'affichage binaire (48) dont l'état indique si les gaz d'échappement du moteur à combustion (4) respectent ou non une valeur limite d'émissions polluantes.

10. Machine selon l'une des revendications précédentes, **caractérisée en ce qu'**elle présente un réservoir pour un produit consommable auxiliaire influant sur la qualité des gaz d'échappement, et l'instrument d'affichage (19) présente un élément d'affichage (47) pour indiquer le niveau de remplissage du réservoir.
